# EUROPÄISCHE PATENTANMELDUNG

(11) **EP 1 201 838 A1**
(43) Veröffentlichungstag der Anmeldung: **02.05.2002**
(21) Anmeldenummer: 01811046.0
(22) Anmeldetag: 25.10.2001
(51) Int. Cl.: E04B 1/80

(54) **Dämmplatte und Verfahren zur Herstellung einer mehrschichtigen Dämmplatte**

(30) Priorität: 25.10.2000 CH 20902000
(71) Anmelder: Alcopor Management AG, 6312 Steinhausen (CH)
(72) Erfinder: Walder, Andreas., CH-8600 Dübendorf (CH)
(74) Vertreter: Blum, Rudolf Emil Ernst

(57) **Zusammenfassung**

Die vorliegende Erfindung betrifft eine Dämmplatte für die Wärmeisolierung von Gebäudefassaden. Die Dämmplatte besteht aus drei Materialschichten (1, 2, 3) aus Polymerschaummaterial, welche ein fest verbundenes Sandwich bilden. Die erste (1) und die dritte Materialschicht (3) sind relativ dünn, bestehen aus expandiertem Polystyrol und bilden die Aussenflächen (A) der Dämmplatte. Die zweiten Schicht (2) hat eine Dicke die einem Vielfachen der Dicke der beiden anderen Schichten (1, 3) entspricht, besteht aus Polyurethanschaum und ist zwischen den beiden anderen Schichten (1, 3) angeordnet. Im Bereich der Stirnflächen (S) treten alle drei Materialschichten (1, 2, 3) in ihrer Schichtung zu Tage. Da Polystyrol eine gute Haftung gegenüber zementgebundenen Klebstoffen aufweist aber eine mittlere Wärmeleitfähigkeit λ besitzt während Polyurethanschaum eine geringe Wärmeleitfähigkeit λ besitzt aber eine schlechte Haftung gegenüber zementgebundenen Klebstoffen aufweist, ergibt sich eine Dämmplatte mit hervorragender Wärmeisolationswirkung über die gesamte Erstreckung der Platte und einer guten Haftung gegenüber Aussenputz und Mörtel.

## Beschreibung

Die vorliegende Erfindung betrifft eine Dämmplatte, ein Eckelement, die Verwendung der Dämmplatte oder des Eckelements sowie ein Verfahren zur Herstellung einer mehrschichtigen Dämmplatte gemäss den Oberbegriffen der unabhängigen Ansprüche.

Dämmplatten werden im allgemeinen zur Wärme- und/oder Schallisolation verwendet. Ein besonders häufiges Anwendungsgebiet ist die Verwendung von Dämmplatten zur Wärmeisolation von Gebäudefassaden, wobei sie sehr oft sowohl der Wärmeisolation als auch der Bereitstellung eines geeigneten Untergrunds für den Aussenputz des Gebäudes dienen. Hierbei ist es wichtig, dass die Haftung des Putzes an der Plattenaussenfläche sichergestellt werden kann und die Fassade derartig aufgebaut ist, dass Verlegefehler und Relativbewegungen der Plattenaussenflächen zueinander, z.B. auf Grund von temperaturbedingten Dehnungen und Schrumpfungen der einzelnen Platten und/oder infolge irreversiblen Schwunds des Plattenmaterials, so gering wie möglich ausfallen.

Aufgrund der guten Haftungseigenschaften von Polystyrol gegenüber zementgebundenen Klebstoffen ist die Verwendung von massiven Styrolpolymerplatten, welche z.B. unter dem Handelsnamen "Styropor" erhältlich sind, weit verbreitet. Da Polystyrol jedoch eine mittlere Wärmeleitfähigkeit λ in W/mK aufweist, sind für eine zeitgemässe Wärmeisolation eines Gebäudes enorme Plattendicken erforderlich, was bei dem heute üblichen beschränkten Platzangebot bzw. den hohen Grundstückspreisen unerwünscht ist.

In EP 0947638 wird daher eine Dämmplatte für Aussenfassaden vorgeschlagen, die einen Kern aus Phenolhartschaum oder Polyurethanschaum aufweist, welcher umgeben ist von einem Mantel aus Polystyrol-Hartschaum. Da das Material des Kerns eine geringere Wärmeleitfähigkeit λ aufweist als expandiertes Polystyrol, ist die vorgeschlagene Dämmplatte bei gleicher Isolationsleistung weniger dick als eine massive Polystyrolplatte. Um die vorgeschlagene Dämmplatte herzustellen, müssen in den Kern vorgängig zum Umschäumen mit Polystyrol Nuten eingefräst werden, welche nach dem Umschäumen und Aushärten des Polystyrolmantels eine formschlüssige Verbindung zwischen Kern und Mantel sicherstellen. Dieses führt zu relative grossen Herstellungskosten. Auch ergibt sich aus dem Aufbau, das die vorgeschlagenen Dämmplatten nur als ganze Platten verwendet werden können, da bei einem Aufschneiden des Polystyrolmantels ein Ablösen desselben vom Kern zu erwarten ist. Ebenfalls nachteilig ist, dass die Ränder der Platten, welche ausschliesslich aus Polystyrol bestehen, gegenüber den Bereichen, in denen sich der Kern befindet, Kältebrücken darstellen und dort aufgrund der verminderten Plattenstärke eine unzureichende Wärmeisolierung bieten.

Alle derzeit bekannten Dämmplatten weisen zudem den Nachteil auf, dass sich bei einer aus ihnen gebildeten Fassade bei starken Temperaturschwankungen durch Dehnungen und Schrumpfungen der einzelnen Platten Relativbewegungen zwischen den Plattenaussenflächen ergeben können, was zur Rissbildung bei einer auf der Fassade aufgetragenen Aussenputzschicht führen kann.

Es stellt sich daher die Aufgabe, eine Dämmplatte, ein Eckelement und ein Verfahren zur Herstellung von Dämmplatten zur Verfügung zu stellen, welche die Nachteile des Standes der Technik nicht aufweisen oder diese beheben.

Diese Aufgabe wird von der Dämmplatte, dem Eckelement sowie von dem Verfahren gemäss den unabhängigen Ansprüchen gelöst.

In einem Aspekt der Erfindung besteht die mehrschichtige Dämmplatte aus mindestens zwei Materialschichten aus Polymerschaummaterial, welche flächig miteinander verbunden sind, derart, dass sie einen festen Verbund bilden. Die erste Schicht bildet eine der beiden Aussenflächen der Dämmplatte und besteht aus einem ersten Polymerschaummaterial. Die zweite Schicht besteht aus einem zweiten Polymerschaummaterial, welches aus einem anderen Polymer ist als das Material der ersten Schicht. Das Material der ersten Schicht weist eine bessere Haftung gegenüber zementgebundenen Klebstoffen, wie z.B. Klebemörtel oder Aussenputz, auf als das Material der zweiten Materialschicht. Das Material der zweiten Materialschicht weist hingegen eine geringere Wärmeleitfähigkeit λ in W/mK auf als das Material der ersten Materialschicht und die zweite Materialschicht erstreckt sich über die gesamte flächige Ausdehnung der Platte, so dass sie teilweise oder vollständig die Stirnflächen der Dämmplatte bildet. Hierdurch ergibt sich eine Dämmplatte, welche bei einer über ihre gesamte flächige Ausdehnung niedrigen Wärmeleitfähigkeit λ mindestens eine Aussenfläche mit einer guten Haftung gegenüber zementgebundenen Klebern aufweist.

Die zweite Materialschicht besteht vorteilhafterweise aus einem Material mit einer Wärmeleitfähigkeit λ kleiner als 0.035 W/mK, bevorzugterweise kleiner als 0.030 W/mK und noch bevorzugter kleiner 0.025 W/mK. Die Verwendung solche Materialien ermöglicht die Herstellung von gut wärmeisolierenden Dämmplatten geringer Dicke.

In einer bevorzugten Ausführung der zuvor beschriebenen Dämmplatte wird die zweiten Aussenfläche der Dämmplatte von einer dritten Materialschicht gebildet, welche vorteilhafterweise aus dem gleichen Material besteht wie die erste Materialschicht. Dämmplatten dieser Bauart weisen den Vorteil auf, dass sie auf beiden Aussenflächen eine gute Haftung gegenüber zementgebundenen Klebstoffen aufweisen, was es ermöglicht, die Platten mit einem Zementmörtel und/oder Kleber auf die Fassade eines Gebäudes aufzukleben und sodann die Aussenfläche der von den Platten gebildeten Fassade mit einem Aussenputz zu überziehen.

Sind die erste und die dritte Materialschicht von gleicher Dicke, so ist es zudem egal, mit welcher Aussenfläche die Dämmplatte zum Gebäude hin angeordnet wird. Ein solcher Aufbau hilft Verarbeitungsfehler zu vermeiden.

Wird die Dämmplatte derartig ausgeführt, dass die Materialschichten der Dämmplatte in ihrer Schichtung an den Stirnflächen der Platte zu Tage treten, so weist die Dämmplatte an jeder Stelle ihrer flächigen Erstrekkung die gleiche Wärmeleitfähigkeit λ auf, was den Vorteil hat, dass Fassaden, welche aus solchen Platten gebildet werden, eine gesamthaft gesehen sehr gleichmässige Wärmeisolation bilden.

Die erste Materialschicht besteht bevorzugterweise aus einem extrudierten oder expandierten Styrolpolymerisat, da dieses eine gute Haftung gegenüber zementgebundenen Klebstoffen aufweist und in Kombination mit den meisten Aussenputz-Sorten bereits bestens erprobt ist. Bevorzugterweise wird ein Styrolpolymerisat verwendet, welches gleichmässig mit mindestens einem teilchenförmiger infrarotreflektierenden und/oder infrarotabsorbierenden Zusatzstoff, insbesondere Aluminium, ein Metalloxid, ein Nichtmetalloxid, Antimontrisulfid, Russ oder Graphit, mit einer grösseren Dichte als das Styrolpolymerisat durchsetzt ist. Der Gesamtanteil dieser Zusatzstoffe am Styrolpolymerisat macht bevorzugterweise weniger als 2 Gew.-% aus. Solche Styrolpolymerisate haben den Vorteil, dass sie gegenüber dem herkömmlichen Polystyrol-Hartschaum eine geringere Wärmeleitfähigkeit λ aufweisen, was zu einer Verbesserung der Wärmeisolationsfähigkeit der Dämmplatte bzw. der Plattendicke bei einer gegebenen Isolationsfähigkeit führt.

Da die erste Materialschicht und gegebenenfalls die dritte Materialschicht eine höhere Wärmeleitfähigkeit λ aufweisen als die zweite Materialschicht und vorrangig dem Bereitstellen von Haftflächen für zementgebundene Klebstoffe wie z.B. Putz dienen, weisen diese mit Vorteil eine Dicke kleiner 7 mm, bevorzugterweise kleiner 5 mm und noch bevorzugter kleiner 3 mm auf.

Die zweite Materialschicht besteht bevorzugterweise aus Polyurethanschaum, insbesondere aus Polyisozyanorat, oder aus Phenolharzschaum, da diese Werkstoffe eine geringe Wärmeleitfähigkeit λ aufweisen und industriell kostengünstig herstellbar sind.

Da die zweite Materialschicht vornehmlich der Wärmedämmung dient, weist sie mit Vorteil eine Dicke auf, die einem Mehrfachen der Dicke der ersten bzw. der dritten Materialschicht entspricht.

In einer bevorzugten Ausführung der Erfindung ist die zweite Materialschicht auf einer ihrer beiden Seiten oder auf beiden Seiten direkt mit der ersten Materialschicht und/oder der dritten Materialschicht, welche die Aussenflächen der Dämmplatte bilden, verbunden. Direkt verbunden bedeutet, dass diese ohne Adhäsionsvermittler, wie z.B. Klebstoff, direkt aneinander angrenzen und einen festen Verbund bilden.

In einem anderen Aspekt der Erfindung ist mindestens eine Stirnfläche der Dämmplatte oder sind mindestens zwei sich gegenüberliegende Stirnflächen der Dämmplatte oder sind alle Stirnflächen der Dämmplatte jeweils durch einen sich im wesentlichen über die gesamte Länge der Stirnfläche erstreckenden und in die Dämmplatte eindringenden Schlitz in einen ersten und einen zweiten Bereich unterteilt. Der zweite Bereich ist im Bereich des Schlitzes gegenüber dem ersten Bereich zur Platte hin zurückgesetzt, so dass bei Angrenzung der Stirnfläche an eine im wesentlichen senkrecht zu einer Aussenfläche der Platte orientierten Angrenzungsfläche der erste Bereich in Kontakt mit der Angrenzungsfläche kommt. Der erste Bereich ist zudem aus einem elastischen Material, wodurch er einen elastisch verformbaren Kontaktbereich bildet, welcher bei der Angrenzung an eine Angrenzungsfläche der zuvor erwähnten Art die Kompensation von temperaturbedingten Dehnungen und Schrumpfungen der Dämmplatte in der Ebene einer Aussenfläche der Platte und/oder von Verlegefehlern durch elastische Formänderung des Kontaktbereichs ermöglicht. Die Funktionsweise ist derart, dass bei einem Anordnen der Dämmplatte an der Angrenzungsfläche oder an der Stirnfläche einer weiteren Dämmplatte der Kontaktbereich unter leichter elastischer Deformation infolge von Druckkräften dicht an der Angrenzungsfläche anliegt und ein anschliessendes Dehnen oder Schrumpfen der Dämmplatte infolge Temperaturänderung derselben lediglich zu einer Zunahme oder Abnahme der Druckspannungen im Kontaktbereich führen, nicht jedoch zu einem Öffnen des Angrenzungsspaltes infolge eines Zusammenziehens der Platte oder zu einem Aufwölben der Dämmplatte infolge behinderten Längendehnung derselben. Eine mit diesen Dämmplatten erstellte Wärmeisolation behält somit unabhängig von Temperaturschwankungen immer eine gleichbleibende und gleichmässige Isolationscharakteristik.

In einer bevorzugten Ausführung der Dämmplatte ist der zweite Bereich der Stirnfläche im Bereich des Schlitzes um 0.3 mm bis 1,8 mm, bevorzugterweise um 0.5 mm bis 1 mm gegenüber dem ersten Bereich der Stirnfläche zurückversetzt. Hierdurch ergibt sich beim Angrenzen der Platte an eine senkrecht zu einer Aussenfläche derselben angeordneten Fläche ein Spalt zwischen dem zweiten Bereich und der Angrenzungsfläche, der zum einen gross genug ist, die Wärmedehnung der Dämmplatte aufzufangen, und zum anderen nur eine geringe Beeinträchtigung der Wärmeisolierwirkung in diesem Bereich hervorruft.

Mit Vorteil weisen die Schlitze bei allen geschlitzten Stirnflächen die gleichen Dimensionen auf und/oder sind bevorzugterweise gleichartig, d.h. am gleichen Ort und in der gleichen Orientierung, an den Stirnflächen angeordnet. Bevorzugterweise weist jede Stirnfläche genau einen Schlitz auf und befinden sich die ersten Bereiche, d.h. die elastischen Kontaktbereiche, bei allen Schlitzen auf der gleichen Seite. Hierdurch ergeben sich fertigungstechnische Vorteile, da alle geschlitzten Stirnflächen mit den gleichen Bearbeitungswerkzeugen unter der gleichen Einstellung bearbeitet werden können.

In einer weiteren bevorzugten Ausführung befindet sich der erste Bereich auf derjenigen Seite vom Schlitz, auf der sich auch diejenige Aussenfläche der Dämmplatte befindet, welche im eingebauten Zustand zur Angrenzung an den Bereich mit der grösseren Temperaturschwankungen dient. Bei Aussenfassaden ist das die Aussenfläche der Dämmplatte, welche die Aussenfläche der Fassade bilden soll. Hierdurch lassen sich aus den Dämmplatten Gebäudefassaden erstellen, welche unabhängig von temperaturbedingten Dehnungen und Schrumpfungen der einzelnen Dämmplatten eine geschlossene Oberfläche bilden und beibehalten und sich daher besonders gut für die Applikation eines durchgängigen Aussenputzes eignen.

Bevorzugterweise ist der Schlitz in der Stirnfläche parallel zu der an die Stirnfläche angrenzenden Aussenkante einer Aussenfläche der Dämmplatte, insbesondere parallel zu der an die Stirnfläche angrenzenden Aussenkante derjenigen Aussenfläche der Dämmplatte, welche im eingebauten Zustand zur Angrenzung an den Bereich mit den grösseren Temperaturschwankungen bestimmt ist. Durch eine derartige Ausgestaltung bilden die ersten Bereiche Kontaktbereiche mit einer über die Länge der jeweiligen Stirnfläche gesehen gleichmässigen Höhe aus, wodurch sich der Vorteil ergibt, dass über die Länge gesehen eine gleichmässige Flächenpressung bei der Angrenzung an Flächen erzielt werden kann. Grenzen der erste Bereich der Stirnfläche und die auf der gleichen Seite des Schlitzes angeordnete Aussenfläche der Dämmplatte unter einem im wesentlichen rechten Winkels aneinander, so lässt sich hierdurch die Einbringung eines Biegemoments in den Kontaktbereich bei Angrenzung desselben an eine senkrecht zur Aussenfläche orientierten Angrenzungsfläche weitestgehend vermeiden.

Weist der erste Bereich der Stirnfläche eine geringere Erstreckung senkrecht zu der Aussenfläche der Dämmplatte, welche im eingebauten Zustand zur Angrenzung an den Bereich mit den grösseren Temperaturschwankungen bestimmt ist, auf als der zweite Bereich, so bleiben die Druckkräfte, welche bei der elastischen Deformation des Kontaktbereichs durch temperaturbedingte Dehnung der Dämmplatte entstehen, klein, was den Vorteil bringt, dass die Neigung der Dämmplatte zur Durchwölbung verringert wird.

Als bevorzugt haben sich Erstreckungen des ersten Bereichs erwiesen, welche 15% bis 65%, bevorzugterweise 25% bis 45% der Dicke der Dämmplatte im Bereich der Stirnfläche betragen.

In einer bevorzugten Ausführung der Dämmplatte dringt der Schlitz unter einem Winkel, bevorzugterweise von 15° bis 45°, gegenüber einer Aussenfläche, bevorzugterweise gegenüber der Aussenfläche der Platte, welche im eingebauten Zustand zur Angrenzung an den Bereich mit den grösseren Temperaturschwankungen bestimmt ist, in die Dämmplatte ein, und zwar bevorzugterweise derart, dass sich der Winkel zur Stirnfläche hin öffnet. Eine derartige Ausgestaltung verschiebt den Bereich der grössten elastischen Deformation des als elastischer Kontaktbereich ausgebildeten ersten Bereichs unter Druckbeaufschlagung weg vom Kantenbereich in einen Bereich der weiter in der Platte liegt.

Bevorzugterweise weist der Schlitz über seine gesamte Erstreckung entlang der Stirnfläche einen konstanten Querschnitt auf, welcher in den meisten Fällen rechteckig ist. Die bevorzugte Eindringtiefe in die Dämmplatte beträgt, gemessen von der an die Stirnfläche angrenzenden Aussenkante der Aussenfläche der Dämmplatte, welche im eingebauten Zustand zur Angrenzung an den Bereich mit den grösseren Temperaturschwankungen bestimmt ist, 10 mm bis 100 mm, bevorzugterweise 20 mm bis 50 mm, wobei diese Tiefe parallel zu der erwähnten Aussenfläche gemessen wird. Eine derartige Eindringtiefe hat sich je nach Plattengrösse und Material als besonders geeignet erwiesen.

Des Weiteren ist es bevorzugt, wenn der zweite Bereich ebenfalls an eine Aussenfläche der Dämmplatte angrenzt und dabei bevorzugterweise mit einer Facette in diese übergeht. Hierdurch lässt sich ein Ausbrechen von Material beim Verarbeiten der Platte verhindern, was die Gefahr, dass es beim Aufkleben der Platten auf eine ebene Fläche zu einem Hervorstehen einzelner Platten infolge von hinter die Platten gerutschten Bruchstücken kommt, herabsetzt.

Die Dämmplatte besteht bevorzugterweise aus mindestens einem Material aus der Gruppe expandierter Polystyrol-Hartschaum, extrudiertes Polystyrol, Polyurethan-Hartschaum oder Phenol-Hartschaum, welches bevorzugterweise eine Wärmeleitfähigkeit λ zwischen 0.015 W/mK und 0.040 W/mK aufweist. Mit Vorteil wird die Dämmplatte einschichtig und einstückig aus einem solchen Material gefertigt, was zu kostengünstigen Dämmplatten führt.

Bei allen Dämmplatten der zuvor beschriebenen Aspekte sind die beiden Aussenflächen bevorzugterweise parallel zueinander, wodurch sich der Vorteil ergibt, dass alle Stirnflächen die gleiche Höhe aufweisen und mehrere Platten zu einer durchgängigen Fläche ohne Höhenversatz aneinander angeordnet werden können. Auch weisen derartige Platten über ihre gesamte flächige Erstreckung eine gleichmässige Wärmeleitfähigkeit auf. Um ein problemloses Zusammenfügen der Platte zu einer Fassade zu ermöglichen, sind die Dämmplatten zudem viereckig, bevorzugterweise rechteckig bzw. quadratisch. Aus Gründen der Handlichkeit bei der Verarbeitung weisen die Platten bevorzugterweise eine Länge im Bereich von 300 mm bis 2500 mm, insbesondere im Bereich 300 mm bis 1300 mm und eine Breite im Bereich von 200 mm bis 1000 mm, insbesondere im Bereich von 200 mm bis 700 mm auf. Die Dicke der Dämmplatte liegt mit Vorteil im Bereich zwischen 30 mm und 300 mm, bevorzugterweise zwischen 50 mm und 130 mm oder zwischen 80 mm und 300 mm, je nach Verwendung und Material der Platte.

In einem weiteren Aspekt der Erfindung wird das Eckelement von mindestens zwei Platten gemäss einem der zuvor beschriebenen Aspekte gebildet, welche unter Winkeln zueinander angeordnet sind. Bevorzugterweise werden die Platten unter rechten Winkeln zueinander angeordnet. Bilden zwei Dämmplatten das Eckelement, so handelt es sich um einen Eckenwinkel, bilden drei Dämmplatten das Eckelement, so handelt es sich um eine Eckenkappe. Mit solchen Eckelementen lassen sich zusammen mit den zuvor dargelegten Dämmplatten durchgängige Isolationsfassaden mit in einem Winkel zueinander angeordneten Teilflächen bilden.

In einer bevorzugten Ausführung des Eckelements sind die das Element bildenden Dämmplatten einstückig miteinander ausgebildet, d.h. die Platten wurden nicht erst nach ihrer Fertigstellung zu einem Eckelement zusammengefügt sondern sind durch die Herstellung des Eckelements entstanden. Bevorzugterweise sind die Schichten von aus mehrschichtigen Dämmplatten gebildeten Eckelementen ebenfalls einstückig miteinander ausgebildet und derartig angeordnet, dass die Schichtung ohne Unterbruch den von den Platten gebildeten Winkeln folgt. Hierdurch lässt sich sicherstellen, dass auch im Eckbereich eine gleichmässige Isolationscharakteristik vorliegt.

In einer anderen bevorzugten Ausführungsform des Eckelements sind die das Eckelement bildenden Platten durch Klebung oder Schweissung miteinander verbunden, was bei mehrschichtigen Platten mit Vorteil derart geschieht, dass die Schichten ohne Versatz zueinander dem Eckenwinkel oder den Eckenwinkeln des Eckelements folgen. Solche Eckelemente lassen sich auf kostengünstige Weise aus industriell gefertigten Dämmplatten herstellen.

In noch einem anderen Aspekt wird die Dämmplatte oder das Eckelement gemäss einem der zuvor beschriebenen Aspekte zur Wärmedämmung und/oder Schallisolation an Aussenfassaden von Gebäuden verwendet. Besonders bevorzugt ist die Verwendung an den Fassaden von Wohnhäusern, weil hier eine besonders gute Wärmedämmung gewünscht ist.

In einem letzten Aspekt der Erfindung umfasst das Verfahren zur Herstellung mehrschichtiger Dämmplatten oder Eckelemente gemäss einem der zuvor erwähnten Aspekte die Arbeitsschritte Bereitstellen der ersten Materialschicht aus dem ersten Material in festem Aggregatzustand, Aufbringen der zweiten Materialschicht aus dem zweiten Material in flüssigem Zustand auf die erste Materialschicht und Aushärten der zweiten Materialschicht in Kontakt mit der ersten Materialschicht unter Bildung eines festen Verbundes beider Materialschichten. Auf diese Weise lassen sich auf kostengünstige Art und Weise erfindungsgemässe Dämmplatten oder Eckelemente herstellen.

In einer bevorzugten Ausführungsform des Verfahrens wird zusätzlich eine dritte Materialschicht, ebenfalls in festem Zustand, bereitgestellt, welche bevorzugterweise aus einem dritten Material oder aus dem Material der ersten Schicht, also aus dem ersten Material, besteht und bevorzugterweise in der gleichen Bereitstellungsform, z.B. als Folien von einer Rolle, wie die erste Schicht bereitgestellt wird. Die zweite Materialschicht wird in diesem Fall zwischen der ersten und der dritten Materialschicht angeordnet, derart, dass die erste und die dritte Materialschicht über die zweite Materialschicht flächig miteinander verbunden werden und nach dem Aushärten der zweiten Materialschicht einen festen Verbund bilden. Hierdurch lässt sich auf einfache Weise eine dreischichtige Dämmplatte herstellen.

Bevorzugterweise werden die erste oder die dritte Materialschicht an einer oder mehreren Düsenanordnungen, aus denen das zweite Material in flüssigem Zustand austritt, vorbeigeführt, so dass das zweite Material auf die erste oder die dritte Materialschicht aufgebracht wird. Die erste und die dritte Materialschicht werden sodann derartig zueinander angeordnet, dass sie über die zweite Materialschicht flächig miteinander verbunden sind, d.h., dass ihre Innenflächen flächig in Kontakt mit der zweiten Schicht stehen. Ein solches Vorgehen begünstigt eine industrielle Fertigung der Dämmplatten.

In einer weiteren bevorzugten Ausführungsform des Verfahrens werden die erste und die dritte Materialschicht mit der zwischen diesen sich befindlichen zweiten Materialschicht im wesentlichen parallel zueinander ausgerichtet mit gleicher Geschwindigkeit und Richtung durch eine Führungsanordnung bewegt, welche durch flächige Begrenzung des Durchtrittsquerschnitts eine definierte Gesamtdicke der drei Schichten während dem mindestens teilweisen Aushärten der zweiten Materialschicht sicherstellt. Mit Vorteil beträgt die Länge des von der Führungsanordnung begrenzten Querschnitts mehr als 15 Meter. Hierdurch lassen sich im Durchlaufverfahren Dämmplatten mit genau definierter Plattendicke herstellen.

Bevorzugterweise verwendet man hierzu eine Führungsanordnung, welche zwei übereinander und mit einem vertikalen Abstand voneinander angeordnete Fördermittel mit flächigen Tragelementen, bevorzugterweise Kettenförderer oder Förderbänder, aufweist.

Die Durchlaufgeschwindigkeiten der drei Materialschichten durch die Führungsanordnung liegen bevorzugterweise im Bereich zwischen 2 und 20 m/min, bevorzugterweise zwischen 5 und 20 m/min und noch bevorzugter zwischen 10 und 20 m/min. Hierdurch wird in Abstimmung mit der Länge der Führungsanordnung sichergestellt, dass die zweite Schicht beim Austritt aus der Führungsanordnung zumindest teilweise ausgehärtet ist.

In einer weiteren bevorzugten Ausführungsform des Verfahrens wird das aus der Führungsanordnung austretende Sandwich aus den drei Schichten in der Länge und/oder in der Breite, z.B. auf ein bestimmtes Mass, nachbearbeitet. Dies erfolgt mit Vorteil durch Sägen oder Fräsen, wobei auch vorgesehen ist, zusätzlich Konturierungen, z.B. einen Wechselfalz oder einen Nutkamm, und gegebenenfalls in die Platte eindringende Schlitze an den Stirnflächen zu erzeugen.

Besonders vorteilhaft ist es, wenn bei dem Verfahren die zweite Materialschicht durch Schäumen bereitgestellt wird, da sich hierdurch eine praktisch beliebige Schichtdicke herstellen lässt.

Bevorzugterweise ist das beschriebene Verfahren ein kontinuierlicher Herstellungsprozess, bei dem fortlaufend ein Plattenstrang aus den erforderlichen Komponenten gebildet wird, welcher an seinem Ende in einzelne Dämmplatten zerteilt wird.

Von Vorteil ist es zudem, wenn die erste und/oder gegebenenfalls auch die dritte Materialschicht in Form einer Folie, bevorzugterweise in Form einer Schälfolie, welche mit Vorteil elastifiziert wurde, bereitgestellt wird, welche bevorzugterweise als ein von einer Rolle abgewickeltes Folienband bereitgestellt wird. Mit Vorteil bestehen diese Folien aus einem expandierten oder extrudierten Polystyrol.

Weitere bevorzugte Ausführungen der Erfindung ergeben sich aus den abhängigen Ansprüchen sowie aus der nun folgenden Beschreibung anhand der Figuren. Dabei zeigen:
Fig. 1 eine dreidimensionale Ansicht einer erfindungsgemässen dreischichtigen Dämmplatte;
Fig. 2 eine dreidimensionale Ansicht eines dreischichtigen Eckelements aus zwei Dämmplatten gemäss Fig. 1;
Fig. 3 eine dreidimensionale Ansicht eines dreischichtigen Eckelements aus drei Dämmplatten gemäss Fig. 1;
Fig. 4 einen Schnitt durch die Dämmplatte von Fig. 1 mit direkt miteinander verbundenen Materialschichten;
Fig. 5 einen Schnitt durch die Dämmplatte von Fig. 1 mit mittels Klebstoffschichten miteinander verbundenen Materialschichten;
Fig. 6 einen Schnitt durch eine weitere erfindungsgemässe dreischichtige Dämmplatte mit unterschiedlichen Aussenschichten;
Fig. 7 einen Schnitt durch eine erfindungsgemässe zweischichtige Dämmplatte;
Fig. 8 einen Schnitt durch eine weitere erfindungsgemässe dreischichtige Dämmplatte mit einer ausschliesslich von der mittleren Schicht gebildeten Stirnfläche;
Fig. 9 einen Schnitt durch eine weitere erfindungsgemässe dreischichtige Dämmplatte mit verzahnten Grenzflächen zwischen den Schichten;
Fig. 10 eine dreidimensionale Ansicht einer erfindungsgemässen Dämmplatte mit vorspringenden Kontaktbereichen zur Kompensation von thermischen Dehnungen und Verlegefehlern;
Fig. 11 einen Schnitt durch die Dämmplatte von Fig. 10;
Fig. 12 einen Schnitt durch eine mehrschichtige erfindungsgemässe Dämmplatte mit vorspringenden Kontaktbereichen zur Kompensation von thermischen Dehnungen und Verlegefehlern;
Fig. 13 einen Schnitt durch eine mehrschichtige erfindungsgemässe Dämmplatte mit zwei vorspringenden Kontaktbereichen zur Kompensation von thermischen Dehnungen und Verlegefehlern;
Fig. 14 eine dreidimensionale Ansicht eines einschichtigen Eckelements aus zwei Dämmplatten gemäss Fig. 11;
Fig. 15 eine Prinzipskizze einer Anordnung zur Durchführung eines erfindungsgemässen Herstellverfahrens zur Herstellung einer erfindungsgemässen dreischichtigen Dämmplatte.

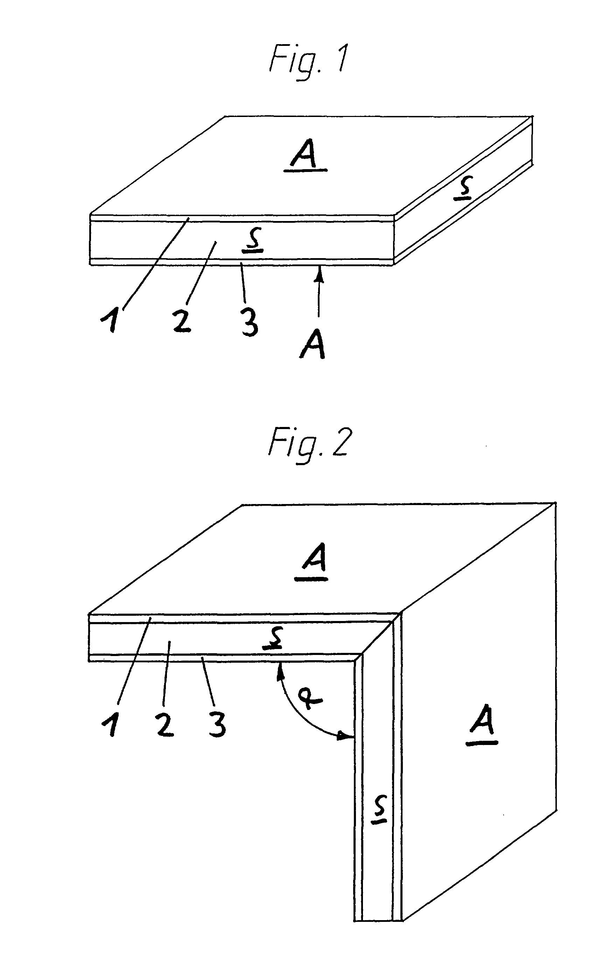

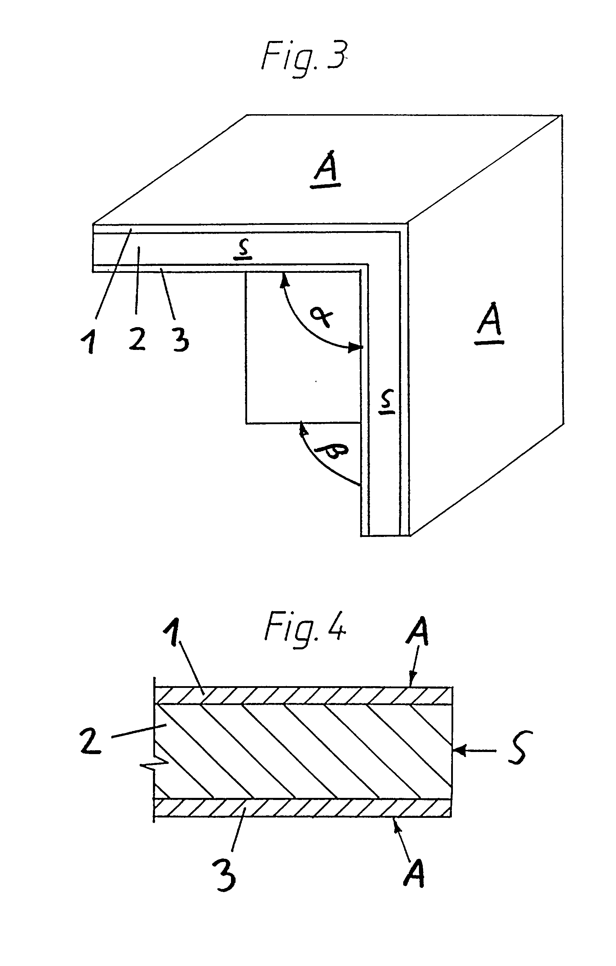

Das Grundprinzip einer bevorzugten Ausführung der Erfindung ist in Fig. 1 dargestellt. Die in dreidimensionaler Ansicht gezeigte Dämmplatte ist quadratisch und besteht aus drei ebenen Schaumpolymerschichten 1, 2, 3. Die beiden parallelen Aussenflächen A der Dämmplatte werden von der ersten Materialschicht 1 und der dritten Materialschicht 3 gebildet. Wie in Verbindung mit Fig. 4, welche einen Schnitt durch die Dämmplatte von Fig. 1 darstellt, zu erkennen ist, ist die zweite Materialschicht 2 direkt und ohne Haftvermittler, wie z.B. Klebstoff, zwischen den beiden anderen Materialschichten 1, 3 angeordnet und bildet einen festen Verbund mit diesen. Im dargestellten Fall sind die Materialschichten 1, 3, welche die Aussenflächen der Dämmplatte bilden, gleich dick und aus einem expandierten Styrolpolymerisat, welches eine gute Haftung gegenüber zementgebundenen Klebstoffen, wie z.B. Aussenputz und Klebemörtel, aufweist. Die zweite Materialschicht 2 ist wesentlich dicker als die beiden anderen Schichten 1, 3 und besteht aus Polyurethanschaum, welcher im Vergleich mit expandiertem Styrolpolymerisat eine schlechte Haftung gegenüber zementgebundenen Klebstoffen aufweist, jedoch eine wesentlich geringere Wärmeleitfähigkeit λ als Polystyrol besitzt. Wie zu erkennen ist, treten alle Materialschichten 1, 2, 3 an den Stirnflächen S der Dämmplatte in ihrer Schichtung zu Tage.

Fig. 2 zeigt eine dreidimensionale Ansicht eines erfindungsgemässen Eckelements, welches aus zwei in einem Winkel α von 90° zueinander angeordneten Platten der zuvor beschriebenen Art durch Verkleben derselben miteinander hergestellt wurde. Wie zu erkennen ist, bildet die Klebefuge die Winkelhalbierende des Winkels α, wodurch die Materialschichten 1, 2, 3 ohne Versatz dem Eckenwinkel α folgen.

Fig. 3 zeigt eine dreidimensionale Ansicht eines Eckelements, welches von drei unter rechten Winkeln α, β zueinander angeordneten Dämmplatten der zuvor erwähnten Art gebildet wird. Im hier dargestellten Fall ist das Eckelement einstückig ausgebildet und die Schichtung der Materialschichten 1, 2, 3 folgt ohne Unterbruch den Eckenwinkeln α und β.

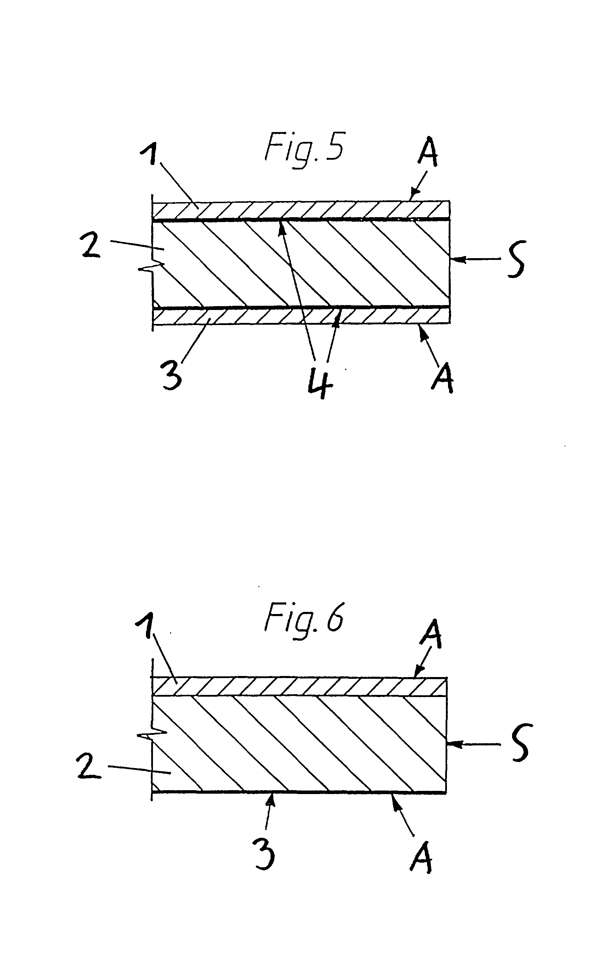

Fig. 5 zeigt einen Schnitt durch eine Dämmplatte mit einem ähnlichen Aufbau wie in Fig. 4, jedoch mit dem Unterschied, dass hier die Materialschichten 1, 2, 3 untereinander durch Klebstoffschichten 4 miteinander verbunden sind.

Fig. 6 zeigt einen Schnitt durch eine weitere erfindungsgemässe Dämmplatte, bei der die erste Materialschicht 1 und die zweite Materialschicht 2 identisch mit denen aus Fig. 4 sind, die dritte Materialschicht 3 hingegen von einem Abdeckpapier 3 gebildet wird.

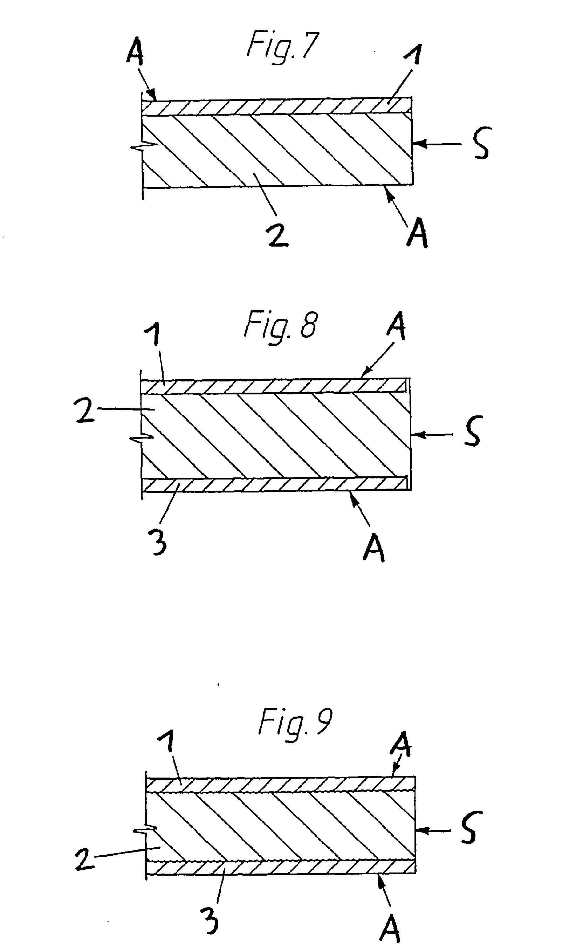

Fig. 7 zeigt einen Schnitt durch eine erfindungsgemässe zweischichtige Dämmplatte mit direkt miteinander verbundener ersten und zweiter Materialschicht 1, 2.

Während bei den zuvor dargestellten Dämmplatten sämtliche Materialschichten 1, 2, 3 an den Stirnflächen S der Dämmplatte in ihrer Schichtung zu Tage treten, zeigt Fig. 8 eine Dämmplatte, bei der die gezeigte Stirnfläche S vollständig von dem Material der zweiten Schicht 2 gebildet wird. Das Material der zweiten Schicht 2 bildet also eine Art Rahmen um die Dämmplatte. Eine solche Platte wird z.B. durch das Einbringen von PU-Schaum zwischen zwei in einer Form angeordneten Polystyrolplatten hergestellt und weist den Vorteil auf, dass eine Kantenbearbeitung entfallen kann. Es ist jedoch zu beachten, dass der bis zu den Plattenaussenflächen vordringende Rahmen aus dem Material der zweiten Schicht 2 im Aussenflächenbereich möglichst dünn sein sollte, da er eine geringere Haftung gegenüber zementgebundenen Klebstoffen aufweist und daher von einem später auf der Dämmplatte aufzutragenden Verputzmaterial überbrückt werden muss.

In Fig. 9 wird ein Schnitt durch eine Dämmplatte mit einem Aufbau wie die Dämmplatte in Fig. 4 dargestellt, jedoch mit dem Unterschied, dass die Grenzflächen zwischen den einzelnen Materialschichten verzahnt ausgebildet sind. Hierdurch ergibt sich neben dem Kraftschluss zwischen den Schichten 1, 2, 3 zusätzlich eine formschlüssige Kraftübertragung zwischen denselben in Richtung der von den Aussenflächen der Dämmplatte gebildeten Ebenen.

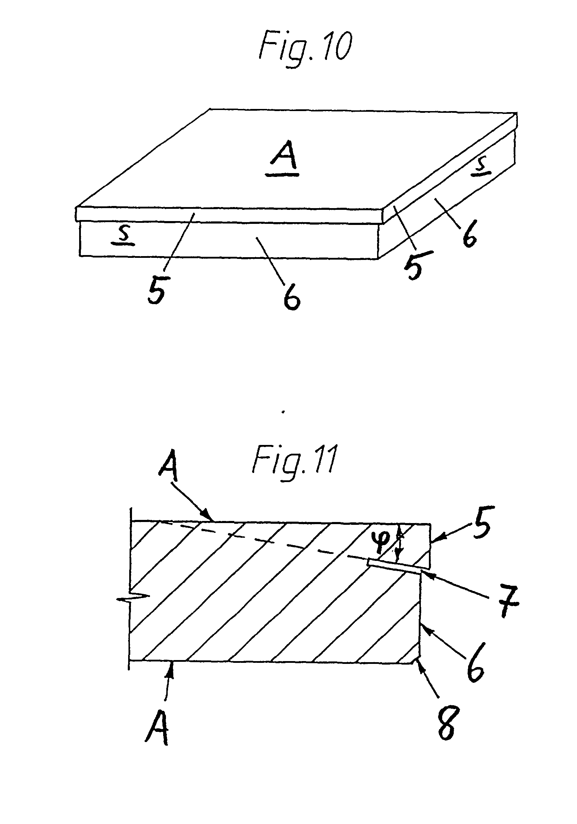

Fig. 10 zeigt eine dreidimensionale Ansicht einer quadratische Dämmplatte, deren vier Stirnflächen S jeweils einen sich über die Länge der Stirnfläche S erstreckenden ebenen Kontaktbereich 5 und einen hinter diesen Kontaktbereich zurückspringenden ebenen Nicht-Kontaktbereich 6 aufweisen.

Wie aus Fig. 11 zu entnehmen ist, welche einen Schnitt durch die Dämmplatte von Fig. 10 darstellt, ist die Dämmplatte im vorliegenden Beispiel einschichtig ausgebildet und sind bei jeder Stirnfläche S der Kontaktbereich 5 und der Nicht-Kontaktbereich 6 durch einen Schlitz 7 mit konstantem Querschnitt über seine Erstreckung entlang der Stirnfläche voneinander getrennt, welcher in die Platte eindringt. Der Kontaktbereich 5, welcher elastisch ausgebildet ist und der Kompensation von temperaturbedingten Dehnungen und Schrumpfungen der Dämmplatte in der Ebene einer Aussenflächen der Platte sowie von Verlegefehlern durch elastische Formänderung dient, befinden sich auf derjenigen Seite des Schlitzes 7, auf der sich auch diejenige Aussenfläche A der Dämmplatte befindet, welche im eingebauten Zustand an den Bereich mit den grösseren Temperaturschwankungen angrenzen soll. Bei Verwendung der Platte zur Wärmedämmung und/oder Schallisolierung, z.B. an bewohnten Gebäuden, ist dies diejenige Aussenfläche der Dämmplatte, welche die Aussenfläche der Gebäudefassade bilden soll. Der Schlitz 7 verläuft parallel zu der von dieser Aussenfläche A und dem Kontaktbereich 5 gebildeten Kante der Dämmplatte. Bei einer Angrenzung der Platte an eine senkrecht zu den Aussenflächen A der Platte orientierten Angrenzungsfläche oder an den Kontaktbereich 5 einer weiteren Dämmplatte gleicher Bauart wird der Kontaktbereich 5 unter Druck leicht verformt und sorgt dadurch auf der Fassadenaussenfläche für einen dichten und dauerhaften Kontakt mit der Angrenzungsfläche oder dem anderen Kontaktbereich, unabhängig von etwaigen temperaturbedingten Dehnungen oder Schrumpfungen der Dämmplatte. Der nicht an eine Angrenzungsfläche angrenzende Nicht-Kontaktbereich 6 bildet im geschilderten Fall einen zur Fassadeninnenseite offenen Spalt, welcher mit der temperaturbedingten Dehnung und Schrumpfung der Platte kleiner oder grösser wird, hierdurch jedoch seine Wärmedämmeigenschaften kaum ändert.

Wie aus Fig. 11 des Weiteren zu erkennen ist, dringt der Schlitz 7 unter einem Winkel ϕ von etwa 15° zu der zuvor erwähnten Aussenfläche A in die Dämmplatte ein, derart, dass sich der Winkel ϕ zur Stirnfläche hin öffnet. Die Aussenfläche A und der Kontaktbereich 5 bilden einen rechten Winkel. Der auf der anderen Seite des Schlitzes 7 liegende Nicht-Kontaktbereich 6 liegt in einer Ebene welche parallel zu der von dem Kontaktbereich 5 gebildeten Ebene ist. Der Nicht-Kontaktbereich 6 grenzt an die andere Aussenfläche A der Platte an und geht mit einer Facette 8 in diese über. Wie weiterhin ersichtlich ist, weist der Kontaktbereich 5 eine geringere Erstreckung in einer Richtung senkrecht zu den Aussenflächen A der Dämmplatte auf als der Nicht-Kontaktbereich 6. Im vorliegenden Fall beträgt die Erstreckung des Kontaktbereichs 5 etwa 30% der Dicke der Dämmplatte im Stirnbereich S.

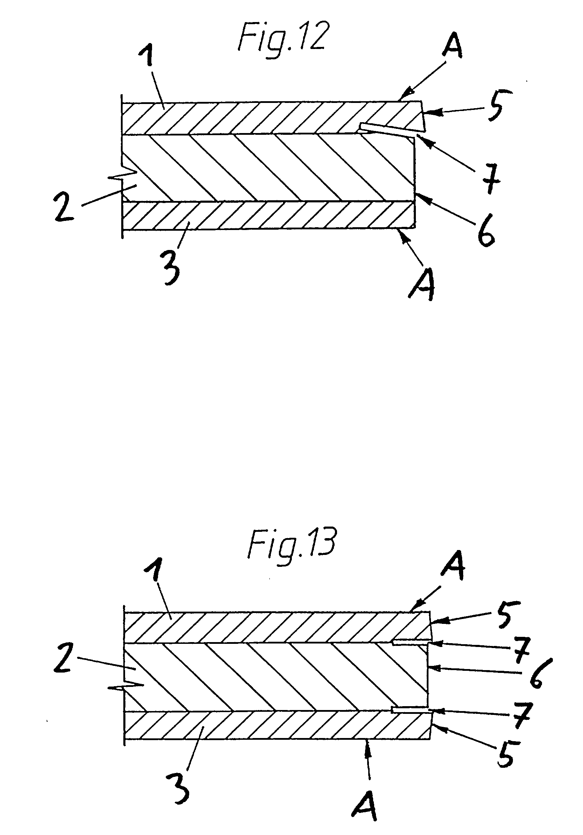

Fig. 12 zeigt einen Schnitt durch eine Dämmplatte wie in Fig. 10 dargestellt, jedoch mit dreischichtigem Aufbau. Die äusseren Schichten 1, 3 dieser Dämmplatte sind im dargestellten Fall aus expandiertem Polystyrol, die mittlere Schicht 2 besteht aus PU-Hartschaum. Bei der hier dargestellten Dämmplatte bildet der Kontaktbereich 5 mit der an diesen angrenzenden Aussenfläche A der Dämmplatte einen Winkel grösser 90°. Hierdurch wird der Kontaktbereich 5 beim Angrenzen an eine senkrecht zur Aussenfläche A ausgerichtete Fläche im Bereich des Schlitzes 7 stärker deformiert als im Bereich der Aussenfläche A, wodurch ein Auswölben der Aussenfläche A der Dämmplatte im Kantenbereich vermieden werden kann.

Fig. 13 zeigt einen Schnitt durch eine weitere mehrteilige Dämmplatte wie in Fig. 10 dargestellt, jedoch weist diese Platte auf jeder Stirnfläche S zwei Schlitze 7 auf, welche die Stirnfläche S in zwei Kontaktbereiche 5 und einen Nicht-Kontaktbereich 6 aufteilen. Im Unterschied zu den zuvor dargestellten Ausführungsformen dringen die beiden Schlitze 7 parallel zu den Aussenflächen A der Dämmplatte in die Platte ein. Hierdurch ergeben sich in diesem Fall fertigungstechnische Vorteile, da die Schlitze von zwei auf einer gemeinsamen Welle angeordneten Fräswerkzeugen gefräst werden können.

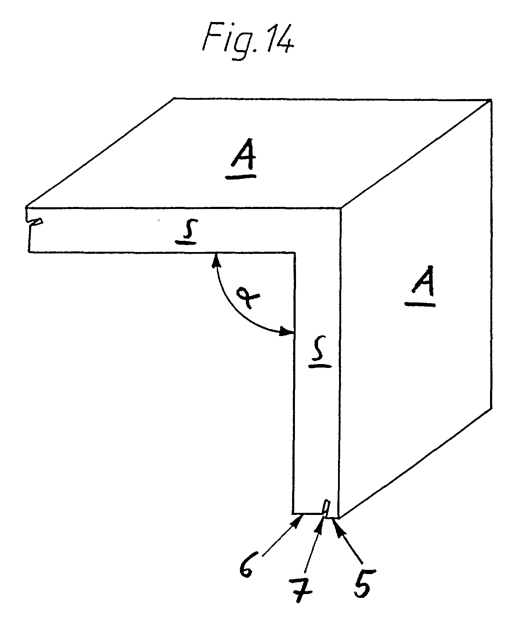

Fig. 14 zeigt eine dreidimensionale Ansicht eines einstückigen Eckelements, welches von zwei Dämmplatten gemäss den Figuren 10 und 11 gebildet wird. Wie zu erkennen ist, sind hier nur die Stirnflächen, welche an den Enden der Schenkel des von dem Eckelement gebildeten Winkels α liegen, mit einem Schlitz 7, einem Kontaktbereich 5 und einem Nicht-Kontaktbereich 6 ausgebildet.

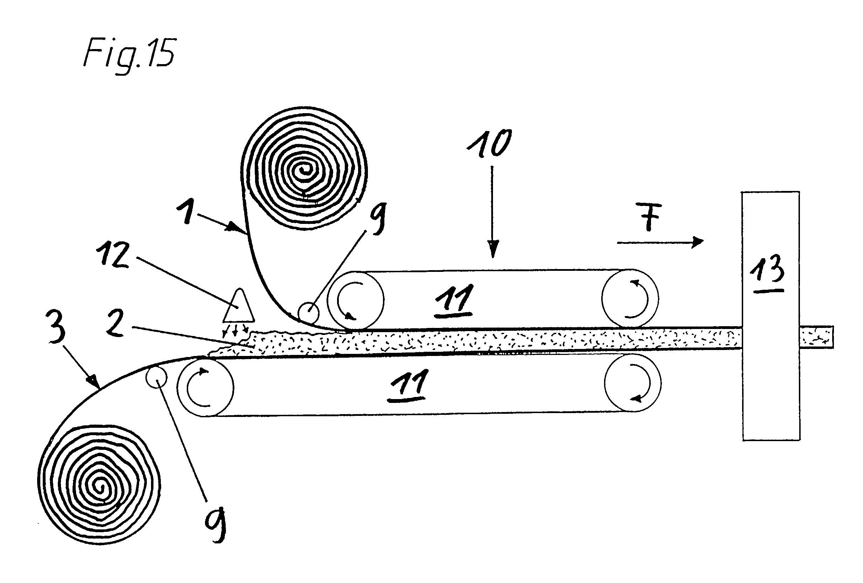

Fig. 15 zeigt eine Prinzipskizze einer Anordnung zur Durchführung eines Verfahrens zur kontinuierlichen Herstellung von dreischichtigen Dämmplatten mit Aussenschichten aus Polystyrol 1, 3 und einer Innenschicht aus Polyurethanschaum 2. Wie zu erkennen ist, werden die Aussenschichten 1, 3 in Form von Schälfolien von Rollen abgewickelt und über Umlenkrollen 9 in eine Führungsanordnung 10 eingeführt, welche von zwei übereinander angeordneten Kettenförderern 11 gebildet wird und einen Spalt mit definiertem Abstand und flächigen Begrenzungen bildet. Der untere Kettenförderer 11 steht gegenüber dem oberen Kettenförderer 11 entgegen der Förderrichtung F vor, so dass die Schälfolie, welche die untere Aussenschicht 3 bildet, bereits vor dem von beiden Kettenförderern 11 gebildeten horizontalen Spalt auf der Förderkette des unteren Kettenförderers 11 horizontal aufliegt. In diesem Bereich ist über der unteren Schälfolie eine Anordnung aus Schäumdüsen 12 angeordnet, aus denen Polyurethan 2 auf die Oberfläche der unteren Schälfolie aufgeschäumt wird während diese Schälfolie in Förderrichtung F fortbewegt wird. In Förderrichtung F gesehen nach den Schäumdüsen 12 wird die andere Schälfolie, welche die obere Aussenschicht 1 bildet, auf die sich auf der ersten Schälfolie befindliche Schicht aus weichem Polyurethanschaum 2 geführt und sodann das dadurch erhaltene "Sandwich" bestehend aus den zwei von Schälfolien gebildeten Aussenschichten 1, 3 mit dem dazwischen angeordneten Polyurethanschaum 2 zur Dickenbegrenzung während der Aushärtung durch die Führungsanordnung 10 geführt. Die Länge der Führungsanordnung 10 und die Durchlaufgeschwindigkeit sind derartig bemessen, dass der Polyurethanschaum 2 beim Austritt aus der Führungsanordnung 10 im wesentlichen ausgehärtet ist. Im vorliegenden Fall ist der von den Kettenförderern 11 gebildete Horizontalspalt etwa 30 m lang und die Durchlaufgeschwindigkeit liegt im Bereich zwischen 2 m/min und 20 m/min. Direkt nach dem Austritt aus der Führungsanordnung 10 durchläuft der Sandwichstrang eine Besäum- und Ablängvorrichtung 13, in welcher er in einzelne Platten zersägt wird und in welchem die Kanten, welche die Stirnflächen (mit oder ohne Konturierung) der fertigen Dämmplatten bilden, gefräst werden. Aus der Besäum- und Ablängvorrichtung 13 treten die fertigen Dämmplatten aus, welche anschliessend verpackt und palettiert werden.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der folgenden Patentansprüche ausgeführt werden kann. Inbesondere kann die Dämmplatte auch als Sturzelement oder als Anschlusselement ausgestaltet sein, und das Eckelement kann sowohl als Innen-Eckelement als auch als Aussen-Eckelement ausgebildet sein.

## Patentansprüche

1. Dämmplatte bestehend aus mindestens zwei flächig miteinander verbundenen Materialschichten (1, 2) aus Polymerschaummaterial, wobei die erste Schicht (1) aus einem ersten Material besteht und eine erste der beiden Aussenflächen (A) der Platte bildet und die zweite Schicht (2) aus einem zweiten Material besteht, welches aus einem anderen Polymer ist als das Material der ersten Schicht (1) und wobei das Material der ersten Schicht (1) eine bessere Haftung gegenüber zementgebundenen Klebstoffen aufweist als das Material der zweiten Schicht (2) und das Material der zweiten Schicht (2) eine geringere Wärmeleitfähigkeit λ aufweist als das Material der ersten Schicht (1), **dadurch gekennzeichnet, dass** sich die zweite Schicht (2) über die gesamte flächige Erstreckung der Dämmplatte erstreckt und mindestens teilweise die Stirnflächen (S) der Dämmplatte bildet.

2. Dämmplatte nach Anspruch 1, **dadurch gekennzeichnet, dass** die zweite Materialschicht (2) aus einem Material mit einer Wärmeleitfähigkeit λ kleiner als 0.035 W/mK, insbesondere kleiner als 0.030 W/mK und insbesondere kleiner 0.025 W/mK ist.

3. Dämmplatte nach einem der vorangehenden Ansprüche, **dadurch gekennzeichnet, dass** die zweite Aussenfläche (A) der Dämmplatte von einer dritten Materialschicht (3) gebildet wird, und insbesondere, dass die dritte Schicht (3) aus dem Material der ersten Materialschicht (1) besteht, und insbesondere, dass die dritte Materialschicht (3) die gleiche Dicke wie die erste Materialschicht (1) aufweist.

4. Dämmplatte nach einem der vorangehenden Ansprüche, **dadurch gekennzeichnet, dass** die Materialschichten (1, 2, 3) an den Stirnflächen (S) der Dämmplatte in ihrer Schichtung zu Tage treten.

5. Dämmplatte nach einem der vorangehenden Ansprüche, **dadurch gekennzeichnet, dass** das Material der ersten Schicht (1) ein expandiertes oder extrudiertes Styrolpolymerisat ist, insbesondere ein Styrolpolymerisat, in welchem gleichmässig verteilt mindestens ein teilchenförmiger infrarotreflektierender und/oder infrarotabsorbierender Zusatzstoff, insbesondere Aluminium, ein Metalloxid, ein Nichtmetalloxid, Antimontrisulfid, Russ oder Graphit, mit einer grösseren Dichte als das Styrolpolymerisat angeordnet ist, und insbesondere, dass der Gesamtanteil dieser Zusatzstoffe am Styrolpolymerisat weniger als 2 Gew.-% ausmacht.

6. Dämmplatte nach einem der vorangehenden Ansprüche, **dadurch gekennzeichnet, dass** die erste Materialschicht (1) eine Dicke kleiner als 7 mm, insbesondere kleiner als 5 mm, und insbesondere kleiner als 3 mm aufweist.

7. Dämmplatte nach einem der vorangehenden Ansprüche, **dadurch gekennzeichnet, dass** die zweite Materialschicht (2) aus einem Polyurethanhartschaum, insbesondere aus Polyisozyanorat, oder aus einem Phenolhartschaum ist, und insbesondere, dass die zweite Materialschicht (2) eine Dicke aufweist, welche ein Mehrfaches der Dicke der ersten Materialschicht (1) ist.

8. Dämmplatte nach einem der vorangehenden Ansprüche, **dadurch gekennzeichnet, dass** die zweite Materialschicht (2) auf einer oder auf beiden Seiten direkt mit einer eine Aussenfläche (A) der Dämmplatte bildenden Materialschicht (1, 3) verbunden ist.

9. Dämmplatte, insbesondere nach einem der vorangehenden Ansprüche, wobei mindestens eine der Stirnflächen (S) der Dämmplatte, mindestens zwei sich gegenüberliegende Stirnflächen (S) oder alle Stirnflächen (S) der Dämmplatte jeweils durch einen im wesentlichen über die gesamte Länge der jeweiligen Stirnfläche (S) sich erstreckenden, in die Platte eindringenden Schlitz (7) in einen ersten (5) und einen zweiten Bereich (6) unterteilt sind, **dadurch gekennzeichnet, dass** der zweite Bereich (6) im Bereich des Schlitzes (7) gegenüber dem ersten Bereich (5) zur Platte hin zurückversetzt ist und der erste Bereich (5) einen elastisch verformbaren Kontaktbereich bildet, welcher bei Angrenzung an eine im wesentlichen senkrecht zu einer Aussenfläche (A) der Platte orientierte Angrenzungsfläche die Kompensation von temperaturbedingten Dehnungen und Schrumpfungen der Dämmplatte in der Ebene einer Aussenfläche (A) der Platte und/oder von Verlegefehlern durch elastische Formänderung ermöglicht.

10. Dämmplatte nach Anspruch 9, **dadurch gekennzeichnet, dass** der zweite Bereich (6) der Stirnfläche (S) im Bereich des Schlitzes (7) um 0.3 mm bis 1,8 mm, insbesondere um 0.5 mm bis 1 mm, gegenüber dem ersten Bereich (5) der Stirnfläche (S) zurückversetzt ist, und insbesondere, dass beide Bereiche (5, 6) ebene Flächen bilden, die in zueinander parallelen Ebenen liegen.

11. Dämmplatte nach einem der Ansprüche 9 bis 10, **dadurch gekennzeichnet, dass** die Schlitze (7) bei allen geschlitzten Stirnflächen (S) der Dämmplatte die gleichen Dimensionen aufweisen und/oder gleichartig an den Stirnflächen (S) angeordnet sind, und insbesondere, dass jede Stirnfläche (S) genau einen Schlitz aufweist und sich die ersten Bereiche (5) bei allen Schlitzen (7) auf der gleichen Seite befinden.

12. Dämmplatte nach einem der Ansprüche 9 bis 11, **dadurch gekennzeichnet, dass** der erste Bereich (5) auf der Seite vom Schlitz (7) angeordnet ist, auf der sich auch diejenige Aussenfläche (A) der Dämmplatte befindet, welche im eingebauten Zustand zur Angrenzung an den Bereich mit den grösseren Temperaturschwankungen bestimmt ist.

13. Dämmplatte nach einem der Ansprüche 9 bis 12, **dadurch gekennzeichnet, dass** der Schlitz (7) in der Stirnfläche (S) parallel zu der an die Stirnfläche (S) angrenzenden Aussenkante einer Aussenfläche (A) der Dämmplatte ist, insbesondere parallel zu der an die Stirnfläche (S) angrenzenden Aussenkante derjenigen Aussenfläche (A) der Dämmplatte ist, welche im eingebauten Zustand zur Angrenzung an den Bereich mit den grösseren Temperaturschwankungen bestimmt ist, und insbesondere, dass der erste Bereich (5) der Stirnfläche (S) und die auf der gleichen Seite des Schlitzes (7) angeordnete Aussenfläche (A) der Dämmplatte unter Bildung eines im wesentlichen rechten Winkels aneinander angrenzen.

14. Dämmplatte nach einem der Ansprüche 9 bis 13, **dadurch gekennzeichnet, dass** der erste Bereich (5) der Stirnfläche (S) eine geringere Erstreckung in einer Richtung senkrecht zu der Aussenfläche (A) der Dämmplatte aufweist, welche im eingebauten Zustand zur Angrenzung an den Bereich mit den grösseren Temperaturschwankungen bestimmt ist, als der zweite Bereich (6) derselben, und insbesondere, dass diese Erstreckung des ersten Bereichs (5) 15% bis 65%, insbesondere 25% bis 45% der Dicke der Dämmplatte im Bereich der Stirnfläche (S) beträgt.

15. Dämmplatte nach einem der Ansprüche 9 bis 14, **dadurch gekennzeichnet, dass** der Schlitz (7) unter einem Winkel (ϕ) zu der Aussenfläche (A) der Dämmplatte, welche im eingebauten Zustand zur Angrenzung an den Bereich mit den grösseren Temperaturschwankungen bestimmt ist, in die Dämmplatte eindringt, insbesondere unter einem Winkel (ϕ) von zwischen 15° und 45°, und insbesondere, dass sich der Winkel (ϕ) zur Stirnfläche (S) hin öffnet.

16. Dämmplatte nach einem der Ansprüche 9 bis 15, **dadurch gekennzeichnet, dass** der Schlitz (7) über seine gesamte Erstreckung entlang der Stirnfläche (S) einen konstanten Querschnitt aufweist und eine Eindringtiefe in die Dämmplatte, gemessen von der an die Stirnfläche (S) angrenzenden Aussenkante der Aussenfläche (A) der Dämmplatte, welche im eingebauten Zustand zur Angrenzung an den Bereich mit den grösseren Temperaturschwankungen bestimmt ist, und parallel zu dieser Aussenfläche (A) von 10 mm bis 100 mm, insbesondere von 20 mm bis 50 mm aufweist.

17. Dämmplatte nach einem der Ansprüche 9 bis 16, **dadurch gekennzeichnet, dass** der zweite Bereich (6) an eine Aussenfläche (A) der Dämmplatte angrenzt, und insbesondere, dass dieser mit einer Facette (8) in die Aussenfläche (A) übergeht.

18. Dämmplatte nach einem der Ansprüche 9 bis 17, **dadurch gekennzeichnet, dass** die Dämmplatte mindestens ein Material aus der Gruppe expandierter Polystyrol-Hartschaum, extrudiertes Polystyrol, Polyurethan-Hartschaum oder Phenol-Hartschaum, insbesondere mit einer Wärmeleitfähigkeit zwischen 0.015 W/mK und 0.040 W/mK, aufweist und insbesondere, das die Dämmplatte einschichtig und einstückig aus genau einem solchen Material ist.

19. Dämmplatte nach einem der vorangehenden Ansprüche, **dadurch gekennzeichnet, dass** die beiden Aussenflächen (A) der Dämmplatte im wesentlichen eben und parallel zueinander sind und insbesondere, dass die Dämmplatte viereckig, insbesondere rechteckig oder quadratisch ist, und insbesondere, dass die Dämmplatte eine Länge im Bereich von 300 mm bis 2500 mm, insbesondere im Bereich 300 mm bis 1300 mm und eine Breite im Bereich von 200 mm bis 1000 mm, insbesondere im Bereich von 200 mm bis 700 mm aufweist.

20. Dämmplatte nach einem der vorangehenden Ansprüche, **dadurch gekennzeichnet, dass** die Dämmplatte eine Dicke im Bereich von 30 mm bis 300 mm, insbesondere im Bereich von 50 mm bis 130 mm oder von 80 mm bis 300 mm aufweist.

21. Eckelement gebildet aus mindestens zwei unter Winkeln (α, β), insbesondere unter rechten Winkeln (α, β), zueinander angeordneten Dämmplatten gemäss einem der vorangehenden Ansprüche.

22. Eckelement nach Anspruch 21, **dadurch gekennzeichnet, dass** die Dämmplatten einstückig miteinander ausgebildet sind und insbesondere, das die Schichten (1, 2, 3) mehrschichtiger Dämmplatten jeweils einstückig miteinander ausgebildet sind und die Schichtung ohne Unterbruch den Winkeln (α, β) des Eckelements folgt.

23. Eckelement nach Anspruch 21, **dadurch gekennzeichnet, dass** die Dämmplatten durch Schweissung oder Klebung miteinander verbunden sind und insbesondere, das die Schichten (1, 2, 3) mehrschichtiger Dämmplatten ohne Versatz zueinander den Winkeln (α, β) des Eckelements folgen.

24. Verwendung der Dämmplatte nach einem der Ansprüche 1 bis 20 oder des Eckelements nach einem der Ansprüche 21 bis 23 zur Wärmedämmung und/oder Schallisolierung an Aussenfassaden von Gebäuden, insbesondere von Wohnhäusern.

25. Verfahren zur Herstellung einer Dämmplatte gemäss einem der Ansprüche 1 bis 20 oder eines Eckelements gemäss einem der Ansprüche 21 bis 23, **dadurch gekennzeichnet, dass** es die folgenden Arbeitsschritte umfasst:
a) Bereitstellen der ersten Materialschicht (1) aus dem ersten Material in festem Aggregatzustand;
b) Aufbringen der zweiten Materialschicht (2) aus dem zweiten Material in flüssigem Zustand auf die erste Materialschicht (1);
c) Aushärten der zweiten Materialschicht (2) in Kontakt mit der ersten Materialschicht (1) unter Bildung eines festen Verbundes beider Materialschichten (1, 2).

26. Verfahren nach Anspruch 25, **dadurch gekennzeichnet, dass** zusätzlich eine dritte Materialschicht (3) in festem Aggregatzustand aus einem dritten Material oder aus dem Material der ersten Materialschicht (1), und insbesondere in der gleichen Bereitstellungsform wie die erste Materialschicht (1), bereitgestellt wird und dass die zweite Materialschicht (2) zwischen der ersten (1) und der dritten Materialschicht (3) angeordnet wird, derart, dass die erste (1) und die dritte Materialschicht (3) über die zweite Materialschicht (2) flächig miteinander verbunden werden und nach dem Aushärten der zweiten Materialschicht (2) einen festen Verbund bilden.

27. Verfahren nach Anspruch 26, **dadurch gekennzeichnet, dass** die erste (1) oder die dritte Materialschicht (3) an einer oder mehreren Düsenanordnungen (12), aus denen das Material der zweiten Materialschicht (2) in flüssigem Zustand austritt, vorbeigeführt wird, derart, dass das zweite Material auf die erste (1) oder die dritte Materialschicht (3) aufgebracht wird und dass die erste (1) und die dritte Materialschicht (3) sodann derartig zueinander angeordnet werden, dass sie über die zweite Materialschicht (2) flächig miteinander verbunden sind.

28. Verfahren nach einem der Ansprüche 26 bis 27, **dadurch gekennzeichnet, dass** die erste (1) und die dritte Materialschicht (3) mit der zwischen diesen sich befindlichen zweiten Materialschicht (2) im wesentlichen parallel zueinander ausgerichtet mit gleicher Geschwindigkeit und Richtung (F) durch eine Führungsanordnung (10) bewegt werden, welche durch flächige Begrenzung des Durchtrittsquerschnitts, insbesondere über eine Länge von mehr als 15 Metern, eine definierte Gesamtdicke der drei Schichten (1, 2, 3) während dem mindestens teilweisen Aushärten der zweiten Materialschicht (2) sicherstellt.

29. Verfahren nach Anspruch 28, **dadurch gekennzeichnet, dass** eine Führungsanordnung (10) verwendet wird, welche zwei übereinander und mit einem vertikalen Abstand voneinander angeordnete Fördermittel mit flächigen Tragelementen, insbesondere Kettenförderer (11) oder Förderbänder, aufweist.

30. Verfahren nach einem der Ansprüche 28 bis 29, **dadurch gekennzeichnet, dass** die drei Materialschichten (1, 2, 3) mit einer Geschwindigkeit im Bereich zwischen 2 und 20 m/min, insbesondere zwischen 5 und 20 m/min und insbesondere zwischen 10 und 20 m/min die Führungsanordnung (10) durchlaufen.

31. Verfahren nach einem der Ansprüche 28 bis 30, **dadurch gekennzeichnet, dass** das aus der Führungsanordnung (10) austretende Sandwich aus den drei Schichten (1, 2, 3) in der Länge und/oder in der Breite, insbesondere durch Sägen oder Fräsen, nachbearbeitet wird.

32. Verfahren nach einem der Ansprüche 25 bis 31, **dadurch gekennzeichnet, dass** die zweite Materialschicht (2) durch Schäumen bereitgestellt wird.

33. Verfahren nach einem der Ansprüche 25 bis 32, **dadurch gekennzeichnet, dass** das Verfahren ein kontinuierlicher Herstellungsprozess ist.

34. Verfahren nach einem der Ansprüche 25 bis 33, **dadurch gekennzeichnet, dass** die erste Materialschicht (1) in Form einer Folie, insbesondere in Form einer Schälfolie, insbesondere in Form einer elastifizierten Schälfolie, insbesondere aus einem expandierten oder extrudierten Polystyrol, bereitgestellt wird, und insbesondere, dass diese als ein von einer Rolle abgewickeltes Folienband bereitgestellt wird.
